# EUROPÄISCHE PATENTSCHRIFT

(11) **EP 4 158 087 B1**
(45) Veröffentlichungstag und Bekanntmachung des Hinweises auf die Patenterteilung: **20.03.2024**
(21) Anmeldenummer: 21719564.3
(22) Anmeldetag: 13.04.2021
(51) Int. Cl.: D03D 1/00, D03D 11/02, B60R 22/12

(54) **GURTBAND FÜR EINE SICHERHEITSGURTEINRICHTUNG EINES KRAFTFAHRZEUGES**
BELT STRAP FOR A SAFETY BELT DEVICE OF A MOTOR VEHICLE
SANGLE DE CEINTURE POUR DISPOSITIF DE CEINTURE DE SÉCURITÉ D'UN VÉHICULE À MOTEUR

(30) Priorität: 26.05.2020 DE 102020206517
(43) Veröffentlichungstag der Anmeldung: 05.04.2023
(73) Patentinhaber: Autoliv Development AB, 447 83 Vårgårda (SE)
(72) Erfinder: IONITA, Ioan, 505300 Predeal/ Brasov (RO); MUELLER, Kai-Stephan, 25524 Oelixdorf (DE); TIRON, Crina, 500053 Brasov (RO); WELZ, Willi, 5464 Veghel (NL); COSTEA, Mihaela, 500171 Brasov County/Brasov City (RO)
(74) Vertreter: Müller Verweyen
(86) Internationale Anmeldenummer: PCT/EP2021/059522
(87) Internationale Veröffentlichungsnummer: WO 2021/239314

(56) Entgegenhaltungen:
- WO-A1-2020/007912
- WO-A1-2020/025627

## Beschreibung

Die vorliegende Erfindung betrifft ein Gurtband für eine Sicherheitsgurteinrichtung eines Kraftfahrzeuges mit den Merkmalen des Oberbegriffs von Anspruch 1.

Gurtbänder in Sicherheitsgurteinrichtungen von Kraftfahrzeugen dienen im Allgemeinen dazu, die Insassen in den Kraftfahrzeugen in einem Unfall zurückzuhalten, um schwerere Verletzungen möglichst zu vermeiden. Die Sicherheitsgurteinrichtungen weisen unter anderem einen fahrzeugfest befestigten Gurtaufroller mit einer Gurtspule auf, auf der ein Ende eines Gurtbandes aufwickelbar ist. Das andere Ende des Gurtbandes ist entweder über eine Gurtzunge in einem fahrzeugfest befestigten Gurtschloss verriegelbar oder über einen Endbeschlag ebenfalls permanent am Fahrzeug befestigt. Sofern das andere Ende über einen Endbeschlag fahrzeugfest befestigt ist, weist die Sicherheitsgurteinrichtung ferner eine auf dem Gurtband verschieblich geführte Gurtzunge auf, welche in einem fahrzeugfesten Gurtschloss z.B. zu einer Dreipunktgeometrie des Gurtbandes verriegelbar ist.

Die Gurtbänder selbst müssen aufgrund ihrer Aufgabe zur Rückhaltung des Insassen verschiedene Anforderungen an die Zugfestigkeit, die Oberflächenbeschaffenheit, die Beschaffenheit der Kanten und dergleichen erfüllen.

Ferner sind moderne Kraftfahrzeuge mit einer Vielzahl von elektronischen Bauteilen, wie Sensoren, Aktuatoren, Bildschirmen, Akustikeinheiten, Heiz- und Kühleinrichtungen etc. versehen, deren Anzahl mit zunehmender Automatisierung der Kraftfahrzeuge mit ihren Antriebseinrichtungen, Steuereinrichtungen und Komforteinrichtungen erwartungsgemäß noch weiter ansteigen wird. Ferner müssen diese Einrichtungen durch elektrische Leitungen miteinander und mit entsprechenden Energiequellen und Steuereinrichtungen verbunden werden. Sofern diese elektronischen Bauteile und Leitungen Teil der Sicherheitsgurteinrichtung sind, müssen diese entsprechend an der Sicherheitsgurteinrichtung angeordnet werden, ohne den Gebrauch oder die Funktionsfähigkeit der Sicherheitsgurteinrichtungen zu beeinträchtigen.

Aus der DE 10 2011009 318 A1 ist es bereits bekannt, das Gurtband mit einem sich in Längsrichtung des Gurtbandes erstreckenden Schlauchabschnitt zu versehen, in den die elektronischen Bauteile einführbar sind. Nähere Angaben, wie der Schlauchabschnitt in dem Gurtband hergestellt ist, sind der Druckschrift nicht zu entnehmen. Aus der WO 2020/007912 A1 ist ein Gurtband für eine Sicherheitsgurteinrichtung eines Kraftfahrzeugs bekannt, wobei das Gurtband einen Hohlabschnitt, aufweist mit einen Hohlraum zur Aufnahme von elektronischen Bauteilen und/oder Leitungen, wobei der Hohlraum durch zwei Gewebelagen gebildet ist, die Gewebelagen durch eine Vielzahl von Kettfäden und Schussfäden gebildet sind und die Gewebelagen in den äußeren, Randabschnitten durch einen oder mehrere parallel zu der Längsrichtung des Gurtbandes verlaufende Randbindungsfäden miteinander verbunden sind.

Vor diesem Hintergrund liegt der Erfindung die Aufgabe zugrunde, ein Gurtband für eine Sicherheitsgurteinrichtung eines Kraftfahrzeuges mit einem Hohlraum zur Aufnahme von elektronischen Bauteilen und Leitungen bereitzustellen, welches möglichst einfach aufgebaut sein soll und zudem kostengünstig herzustellen sein soll.

Erfindungsgemäß wird zur Lösung der Aufgabe ein Gurtband mit den Merkmalen von Anspruch 1 vorgeschlagen. Weitere bevorzugte Weiterentwicklungen sind den Unteransprüchen, den Figuren und der dazugehörigen Beschreibung zu entnehmen.

Gemäß dem Grundgedanken der Erfindung wird vorgeschlagen, dass der in einem Hohlabschnitt des Gurtbandes gebildete Hohlraum durch zwei Gewebelagen gebildet ist, welche in den äußeren Randabschnitten durch einen oder mehrere parallel zu der Längsrichtung des Gurtbandes verlaufenden Randbindungsfaden/verlaufende Randbindungsfäden miteinander verbunden sind. Dieser Hohlabschnitt ist nicht durchgängig über die gesamte Länge des Gurtbandes ausgeführt, sondern an den Hohlabschnitt schließt sich mindestens ein Einzellagenabschnitt an. Dieser Einzellagenabschnitt ist aus den gleichen Gewebelagen wie der Hohlabschnitt gebildet, die jeweils kontinuierlich durch eine Vielzahl von Kettfäden und Schussfäden gewebt sind. Der Randbindungsfaden/die Randbindungsfäden verlaufen ebenfalls kontinuierlich sowohl im Hohlabschnitt als auch im Einzellagenabschnitt. Dabei sind in dem zwischen den Randabschnitten angeordneten Zentralbereich mehrere parallel zu der Längsrichtung des Gurtbandes verlaufende, zentrale Bindungsfäden vorgesehen, die im Einzellagenabschnitt die Gewebelagen miteinander verbinden und im Hohlabschnitt in nur einer Gewebelage verwebt sind.

Durch die erfindungsgemäße Lösung kann der Hohlraum bereits beim Weben des Gurtbandes mit hergestellt werden. Dabei wird das Gurtband in seinem Grundaufbau in zwei voneinander unabhängige Gewebelagen gewebt, welche im Hohlbereich nur in den Randabschnitten durch Randbindungsfäden miteinander verbunden sind. Im Einzellagenabschnitt sind die Gewebelagen durch die Randbindungsfäden und die zentralen Bindungsfäden über die gesamte Breite des Gurtbandes miteinander verbunden, während im Hohlabschnitt die zentralen Bindungsfäden innerhalb einer Gewebelage verlaufen und somit einen Hohlraum zwischen den Gewebelagen entstehen lassen. Dabei können die zur Verbindung der beiden Gewebelagen vorgesehenen Verbindungsfäden beim Weben gleich mit eingewebt werden, so dass die Verbindung der Gewebelagen beim Weben direkt verwirklicht wird, und es entfällt ein weiterer gesonderter Arbeitsschritt zum Verbinden der Gewebelagen. Da die Bindungsfäden lediglich der Verbindung der beiden Gewebelagen dienen, die im Rückhaltefall wirkenden Zugkräfte aber nach wie vor von den Kettfäden aufgenommen werden, reicht es aus, wenn die Bindungsfäden allein unter dem Gesichtspunkt einer zuverlässigen Verbindung der beiden Gewebelagen ausgelegt und angeordnet werden. Dabei können als Auslegungsparameter für die Verbindung der Gewebelagen die Garnstärke der Gewebelagen die Garnstärke der Bindungsfäden, der Werkstoff der Bindungsfäden und auch die Anzahl der Bindungsfäden genutzt werden. Dadurch dass nicht der gesamte Bereich des Gurtbandes als Hohlabschnitt ausgebildet ist, sondern sich beispielsweise auch mehrere kurze Hohlabschnitte mit Einzellagenabschnitten abwechseln können, kann nur in dem Bereich des Gurtbandes, in dem eine elektronische Funktionalität benötigt wird, ein Hohlraum vorgesehen sein. Das führt auch zu verbesserten Aufroll- und Rückhalteeigenschaften der Sicherheitsgurteinrichtung.

Erfindungsgemäß wird vorgeschlagen, dass die Gewebelagen durch eine Vielzahl von Kettfäden und Schussfäden gebildet sind. Die Kettfäden verlaufen in Richtung der Längsrichtung des Gurtbandes und werden durch die Schussfäden zu dem flächigen Gewebe miteinander verbunden. Dabei bilden die Kettfäden bei dem fertig gewebten Gewebe die Oberflächen der Gewebelagen, während die Schussfäden zwischen den Kettfäden verlaufen und von au-ßen bei einem entsprechend dichten Gewebe nicht zu erkennen sind. Die Kettfäden sind entsprechend zugfest ausgebildet und dienen der Aufnahme der Zugkräfte in Längsrichtung des Gurtbandes, während die Schussfäden feiner ausgebildet sind und dem Zusammenhalt der Kettfäden dienen.

Weiter wird vorgeschlagen, dass das Gurtband eine Breite von 40 bis 50 mm, bevorzugt von 46 bis 48 mm aufweist, und die Randabschnitte, in denen die Gewebelagen durch die Bindungsfäden miteinander verbunden sind, eine Breite von jeweils wenigstens 2 mm, bevorzugt von wenigstens 4 mm aufweisen. Die vorgeschlagene Breite des Gurtbandes entspricht der Standardbreite von Gurtband. Durch die vorgeschlagene Bemessung der Randabschnitte kann verhindert werden, dass das Gurtband unter Einwirkung von Scherkräften seine flächige Ausbildung verliert, und dass sich dadurch Falten in dem Gurtband bilden. Insbesondere kann dadurch verhindert werden, dass sich das Gurtband mit den beiden Gewebelagen unter einem seitlichen Abrollen der Randabschnitte in Längsrichtung verdrillt oder verwindet. Dabei kann die Breite der Randabschnitte und die damit verbundene flächige Verbindung der Gewebelagen in den Randabschnitten insbesondere durch eine entsprechende Wahl der Anzahl und Anordnung der Bindungsfäden erreicht werden.

Weiter wird vorgeschlagen, dass der Hohlabschnitt eine Länge von 1300 bis 1700 mm aufweist und ein in dem Hohlabschnitt angeordneter Hohlraum eine Breite von 10 bis 37 mm aufweist. Durch die vorgeschlagene Bemessung der Hohlraumbreite kann der Hohlraum an die verwendete Nutzung angepasst werden, so dass beispielsweise ein Hohlraum zur Führung elektrischer Leitungen sehr schmal bemessen sein kann. Ein Gurtband in einer Sicherheitsgurteinrichtung für Kraftfahrzeuge ist standardmäßig 3500 mm lang. Durch den bevorzugten Längenbereich des Hohlabschnitts kann dem Gurtband eine Funktionalität nur in dem Bereich verliehen werden, in dem sie benötigt wird.

Weiter wird vorgeschlagen, dass ein Abschnitt des Gurtbandes, der bei einer Sicherheitsgurteinrichtung eines Kraftfahrzeugs in dem angelegten Zustand im Bereich eines Umlenkers oder einer Gurtzunge angeordnet ist oder nach dem Abschnallen auf einem Gurtaufrollers aufzuwickeln ist, ein Einzellagenabschnitt ist. Die vorgeschlagenen Weiterentwicklungen führen zu verbesserten Aufroll- und Rückhalteeigenschaften der Sicherheitsgurteinrichtung. Derr Einzellagenabschnitt weist grundsätzlich den Vorteil auf, dass hier keine aufeinanderliegenden und gegeneinander verschieblichen Gewebelagen vorgesehen sind, wie dies bei den Hohlabschnitten der Fall ist. Damit besteht bei dem Einzellagenabschnitt eine erheblich geringere Wahrscheinlichkeit einer Verwindung des Gurtbandes und das Gurtband kann auf der Spule zu einem wesentlich kompakteren faltenfreien Gurtwickel aufgerollt werden. Ferner tendiert das Gurtband dadurch im Bereich der Umlenkung in der Gurtzunge und im Bereich des Umlenkers bei auftretenden Querkräften nicht dazu Wellen zu bilden. Der Einzellagenabschnitt kann hier dadurch gebildet werden, indem das Gurtband in diesen Abschnitten in einer einzigen Gewebelage gewoben ist, oder indem die beiden Gewebelagen in diesem Abschnitt flächig durch Bindungsfäden miteinander verbunden sind.

Der Randbindungsfaden ist dabei bevorzugt in einer regelmäßigen Bindung mit den Schussfäden verwebt, beispielsweise eine 2/2-Bindung oder eine 4/4-Bindung, wodurch sich eine gleichmäßige Verbindung der Gewebelagen mit einer möglichst homogenen, glatten Oberflächenstruktur erzielen lässt. Unter einer 4/4-Bindung soll dabei eine Bindung verstanden werden, in der der Randbindungsfaden durch einen Seitenwechsel in Bezug zu den beiden Webfächern der beiden Gewebelagen während des Webens periodisch immer an vier aufeinanderfolgenden Schussfäden an einer Seite und an den darauf folgenden zwei Schussfäden an der anderen Seite des Gurtbandes angeordnet ist. Die jeweils unmittelbar benachbarten Randbindungsfäden oder auch mehrere benachbart angeordnete Gruppen von Randbindungsfäden können dabei bevorzugt so ausgerichtet sein, dass sie beim Weben jeweils auf den gegenüberliegenden Seiten des Webfaches und damit an gegenüberliegenden Seiten der Schussfäden angeordnet sind. Alternativ können die unmittelbar benachbarten Randbindungsfäden auch jeweils um einen oder zwei Schussfäden versetzt angeordnet sein. Damit werden die Kettfäden aufgrund der durch die Bindungsfäden geschaffenen Verbindung der Schussfäden der unterschiedlichen Gewebelagen durch die Bindungsfäden mittelbar auch verbunden, so dass sich ein fester Verbund der beiden ansonsten voneinander unabhängigen Gewebelagen in den Randabschnitten ergibt. In den Randabschnitten ist eine dichte flächige Verbindung der Gewebelagen zur flächigen Stabilisierung des gesamten Gurtbandes am effektivsten. Im Einzellagenabschnitt kann die Bindung der zentralen Bindungsfäden mit den Schussfäden der Gewebelagen von den besonders stabilisierenden Bindungen der Randbindungsfäden abweichen, hat aber ebenfalls einen verbindenden stabilisierenden Flächeneffekt.

Weiter bevorzugt sind die zentralen Bindungsfäden im Bereich des Hohlraums im Hohlabschnitt innerhalb einer der Gewebelagen mit der gleichen Bindung wie die zu der Gewebelage gehörigen Kettfäden verwebt. Dadurch gehen die Gewebelagen kontinuierlich vom Einzellagenabschnitt in den Hohlabschnitt über, ohne dass die Oberfläche im Bereich des Hohlraumes eine Veränderung der Optik und Haptik aufweist. Die zentralen Bindungsfäden wechseln dabei von einer Bindung, welche die zentralen Bindungsfäden zum Zwecke der Verbindung durch beide Gewebelagen führt, zu einer einlagigen Bindung. Im Gegensatz zu den Randbindungsfäden und den Kettfäden, verlaufen die zentralen Bindungsfäden am Abschnittsübergang diskontinuierlich und weisen in den Einzellagenabschnitten und Hohlabschnitten sowohl eine unterschiedliche Periodizität als auch eine unterschiedliche Webtiefe, zweilagig bzw. einlagig, auf.

Weiter wird vorgeschlagen, dass die Kettfäden in einer 7/1-Bindung mit den Schussfäden verbunden sind. Unter einer 7/1-Bindung wird in Anlehnung an die obige Definition der Bindung des Randbindungsfadens eine Bindung der Kettfäden mit den Schussfäden verstanden, bei der die Kettfäden in einer periodischen Abfolge während sieben aufeinanderfolgender Schussfäden an einer Seite des Webfaches einer Gewebelage angeordnet sind, dass sie für einen nachfolgenden Schussfaden die Seite des Webfaches wechseln, bevor sie für die Wiederholung des Ablaufes für die nächsten sieben Schussfäden wieder auf der anderen Seite des Webfaches angeordnet sind. Durch die vorgeschlagene Bindung der Kett- und Schussfäden kann eine haptisch- und reibungsoptimierte Oberfläche geschaffen werden. Ferner können dadurch jeweils Gewebelagen geschaffen werden, welche durch den Bindungsfaden mit der vorgeschlagenen Bindung besonders gut unter Bildung eines Hohlraums miteinander verbunden werden können.

Weiter können die beiden Gewebelagen im Hohlbereich in einem oder mehreren zwischen den Randabschnitten angeordneten Zentralabschnitten unter Bildung von zwei oder mehr voneinander getrennten Hohlräumen miteinander verbunden sein. Durch die vorgeschlagenen zusätzlichen Verbindungsabschnitte kann die Verbindung der Gewebelagen einerseits weiter verbessert werden, und andererseits können mehrere voneinander getrennte Hohlräume, z.B. zwecks einer bewusst getrennten Führung von Leitungen oder einer getrennten Anordnung von elektrischen Bauteilen, geschaffen werden. In einer bevorzugten Ausführungsform kann der Hohlbereich zwei in Längsrichtung des Gurtbandes parallel verlaufende Hohlräume umfassen der zwischen diesen beiden Hohlräumen gebildete Verbindungsbereich der Gewebelagen wird durch einen Teil der zentralen Bindungsfäden verwirklicht, die hier nicht mit der Bindung der Kettfäden in nur einer Gewebelage verlaufen, sondern weiter wie im Einzellagenabschnitt die beiden Gewebelagen miteinander verbinden. Die beiden Hohlräume haben dabei vorzugsweise eine Breite von jeweils 10 bis 18,5 mm. Eine weitere Ausführungsform umfasst drei parallel verlaufende Hohlräume, die bei gleicher Bemessung, jeweils eine Breite von 10 bis 12 mm aufweisen. Prinzipiell sind auch weitere Ausführungsformen mit weiteren Hohlräumen, beispielsweise vier oder fünf Hohlräume, denkbar, jedoch sollte die gesamte Breite der Vielzahl von parallel verlaufenden Hohlräumen nicht die bevorzugte maximale Breite eines einzelnen Hohlraums von 37 mm überschreiten, damit die Randabschnitte noch eine ausreichende Breite zur flächigen Stabilisierung des gesamten Gurtbandes aufweisen. Bei einer höheren Anzahl von parallel verlaufenden Hohlräumen wird der nutzbare Raum der einzelnen Hohlräume zudem immer kleiner und damit ineffektiv, zumal auch noch die zahlreicheren, zwischen den Hohlräumen liegenden Verbindungsbereiche nicht zur Nutzung zur Verfügung stehen.

Die Erfindung wird im Folgenden anhand bevorzugter Ausführungsformen unter Bezugnahme auf die beigefügten Figuren erläutert. Dabei zeigt
- Fig. 1: ein erfindungsgemäßes Gurtband in Draufsicht und Schnittdarstellung;
- Fig. 2: eine schematische Darstellung der Bemessungen eines erfindungsgemäßen Gurtbandes mit einem, zwei und drei parallel verlaufenden Hohlräumen; und
- Fig. 3: einen Längsschnitt durch die Gewebelagen eines Gurtbandes in einer vergrößerten, auseinander gezogenen Darstellung.

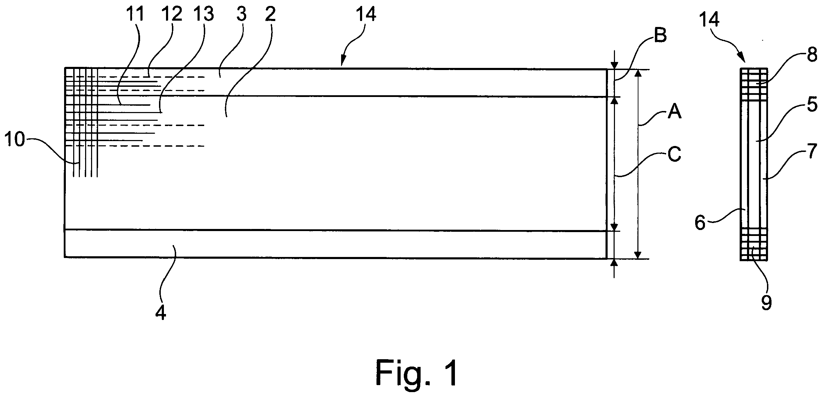

In der Figur 1 ist der Hohlabschnitt 14 eines erfindungsgemäßen Gurtbandes 1 in Draufsicht und in der rechten Darstellung in Schnittdarstellung zu erkennen. Das Gurtband 1 weist zwei Gewebelagen 6 und 7 auf, welche in einem Zentralabschnitt 2 nicht miteinander und in zwei äußeren Randabschnitten 3 und 4 miteinander verbunden sind. Das Gurtband 1 weist weiter eine Breite A von 46 bis 48 mm auf, während die Randabschnitte 3 und 4 jeweils eine Breite B von 2 mm, bevorzugt von 4 mm aufweisen.

Das Gurtband 1 weist eine Vielzahl von in Längsrichtung des Gurtbandes 1 verlaufenden Kettfäden 11 auf, welche mit senkrecht zu diesen verlaufenden Schussfäden 10 zu den Gewebelagen 6 und 7 verwebt sind. Dabei weist jede der Gewebelagen 6 und 7 voneinander getrennte Kettfäden 11 und Schussfäden 10 auf, so dass sie voneinander unabhängige Gewebelagen 6 und 7 bilden. In den Randabschnitten 3 und 4 sind die Gewebelagen 6 und 7, wie nachfolgend noch beschrieben wird, miteinander verbunden, so dass zwischen den Gewebelagen 6 und 7 ein Hohlraum 5 gebildet wird, der zu den Randseiten hin durch die Verbindung in den Randabschnitten 3 und 4 begrenzt ist. In dem Hohlraum 5 können elektrische Leitungen oder weitere elektronische Bauteile wie z.B. kleinere Steuer- oder Speichereinheiten, einfache Schalter, akustische Wiedergabeeinrichtungen, Heizeinrichtungen oder dergleichen angeordnet sein.

Die beiden Gewebelagen 6 und 7 sind durch in den Randabschnitten 3 und 4 vorgesehene Randbindungsfäden 12 miteinander verwebt, welche in den Randabschnitten 3 und 4 Verbindungsabschnitte 8 und 9 der Gewebelagen 6 und 7 bilden. Die Randbindungsfäden 12 müssen nicht über die gesamte Breite der Randabschnitte 3 und 4 vorgesehen sein. Sofern z.B. eine besondere Bindung im Bereich der Kante des Gurtbandes 1 zur Verwirklichung einer möglichst weichen Kante vorgesehen ist, können die Randbindungsfäden 12 in den äu-βeren Randbereichen der Randabschnitte 3 und 4 auch weggelassen werden, sofern dies für die Verbindung der Gewebelagen 6 und 7 nicht von Nachteil ist. Im Zentralbereich 2 sind zentrale Bindungsfäden 13 vorgesehen, die in dem hier dargestellten Hohlbereich 14 jedoch nicht zur Verbindung der Gewebelagen 6 und 7 beitragen, sondern nur innerhalb einer Gewebelage 6 oder 7 gewebt sind, um die Bildung eines Hohlraumes 5 zu verwirklichen.

Die Breite B der Randabschnitte 3 und 4 ist bewusst mit 2 mm so groß gewählt, dass die Verbindung in den Randabschnitten 3 und 4 dem gesamten Gurtband 1 eine flächige Ausbildung aufzwingt. Dabei kann dieser Effekt noch vergrößert werden, indem die Breite der Randabschnitte 3 und 4 noch größer z.B. mit einer Breite B von 4 mm oder noch größer gewählt wird. Dadurch wird verhindert, dass sich das Gurtband 1 bei der Einwirkung von Querkräften unter einem Abrollen der Kanten der Randabschnitte 3 und 4 um seine Längsachse verdrillt oder verwindet. Sofern es sinnvoll ist, können die Randabschnitte 3 und 4 in der Breite B auch noch größer bemessen werden, wodurch die Größe des Hohlraumes 5 aber verkleinert wird. Dies kann z.B. sinnvoll sein, wenn der Hohlraum 5 bewusst schmaler, in Form eines Kanals verwirklicht sein soll, wodurch die Anordnung und der Verlauf der Leitungen in dem Gurtband 1 vorgegeben bzw. definiert werden kann.

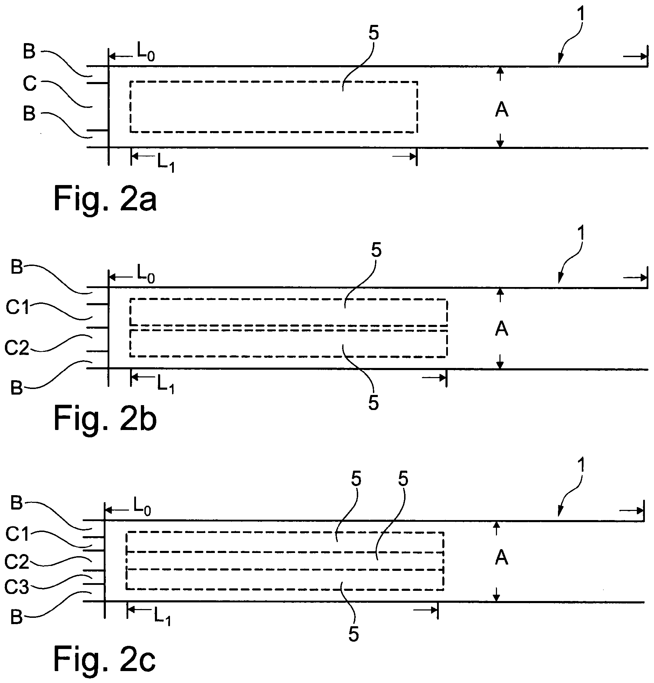

In der Figur 2 sind die Bemessungen der Gurtbänder für verschiedene Hohlabschnitte 14 dargestellt. Die Gesamtlänge L0 eines Gurtbandes einer üblichen 3-Punkt-Sicherheitsgurteinrichtung für Kraftfahrzeuge beträgt in der Regel 3500 mm. Die Breite A des gesamten Gurtbandes 1 beträgt bevorzugt 46 bis 48 mm. Die Gesamtbreite des Hohlraums 5 in Fig. 2a beträgt bevorzugt maximal 37 mm, um ausreichend große Randbereiche 3, 4 freizuhalten, die für eine flächige Ausbildung des gesamten Gurtbandes 1 sorgen. Daher haben auch die beiden parallel verlaufenden Hohlräume 5 in Figur 2b ein Breite C1, C2 von jeweils bevorzugt 10 bis 18,5 mm, und die drei parallel verlaufenden Hohlräume 5 in Figur 2c eine Breite C1, C2, C3 von bevorzugt jeweils 10 bis 12 mm. Die Länge L1 des dargestellten Hohlabschnitts 14, bzw. der Hohlräume 5, beträgt bevorzugt 1300 bis 1700 mm. Es ist allerdings nur jeweils ein Hohlabschnitt 14 dargestellt. Es können auf der gesamten Länge L0 des Gurtbandes 1 jedoch noch weitere Hohlabschnitte 14 vorgesehen sein, die von Einzellagenabschnitten 15 unterbrochen sind. So ist insbesondere bei einer 3-Punkt-Gurtgeometrie vorstellbar, dass im angelegten Zustand des Sicherheitsgurtes beispielsweise nur im Brustbereich und im Hüftbereich Hohlabschnitte 14 vorgesehen sind, nicht jedoch im Bereich der verschiebbaren Gurtzunge, wenn diese im Gurtschloss verankert ist, und insbesondere nicht im Bereich des Gurtaufrollers und der Rückhalteeinrichtung. In diesen Bereichen ist die Anordnung von Einzellagenabschnitten 15 vorteilhafter. Ferner ist es von Vorteil, wenn die Hohlabschnitte 14 bzw. der Hohlabschnitt so ausgelegt und angeordnet sind, dass das Gurtband 1 im Bereich des Durchlaufes durch einen fahrzeugfesten Umlenker als Einzellagenabschnitt 15 ausgebildet ist. Der Vorteil dieser Lösungen ist darin zu sehen, dass die Wahrscheinlichkeit, dass sich das Gurtband 1 dadurch weder im Bereich der verschiebbaren Gurtzunge noch im Bereich des Durchlaufes durch den fahrzeugfesten Umlenker verwindet, verringert werden kann. Grundsätzlich besteht bei den Hohlabschnitten 14 die Gefahr, dass die beiden Gewebelagen, bei der Einwirkung von Scher- oder Querkräften gegenseitig abrollen und dadurch verwinden. Dieser Effekt kann durch die gezielte Ausbildung des Gurtbandes 1 als Einzellagenabschnitt 15 in den vorgeschlagenen Bereichen verringert werden. Dabei sind die vorgeschlagenen Bereiche insofern bevorzugt ausgewählt, da hier die Wahrscheinlichkeit des Auftretens von Querkräften besonders groß ist (Umlenker, Gurtzunge) oder eine Verwindung von besonderem Nachteil ist (Gurtaufroller, Umlenker und Gurtzunge).

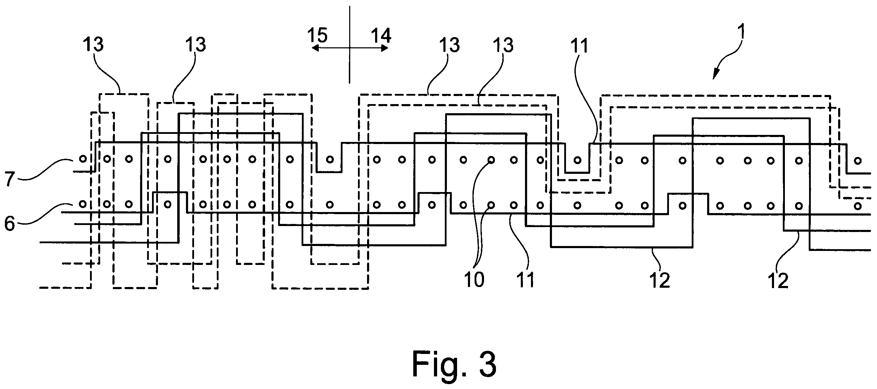

In der Figur 3 ist das Gurtband 1 in einem Schnitt zu erkennen. Die beiden Gewebelagen 6 und 7 sind in einer 7/1-Bindung gewebt. Der Wechsel der Kettfäden 11 von einer Seite zu der anderen Seite des Webfaches in dem Webstuhl einer Gewebelage 6 oder 7 ist so gewählt, dass sie in einer periodischen Abfolge zuerst auf einer Seite des Webfaches angeordnet sind, während sieben Schussfäden 10 durch das Webfach geschossen werden. Anschließend wechseln die Kettfäden 11 auf die andere Seite des Webfaches für den Schuss eines nächsten Schussfadens 10, bevor sie zur Wiederholung des Webrhythmus für die nachfolgenden sieben Schussfäden 10 der nächsten Periode wieder auf die andere Seite des Webfaches wechseln. Damit ergibt sich ein Rhythmus mit jeweils sieben Schussfäden 10, die die Kettfäden 11 zu einer Seite hin abdecken, und anschließend einem Schussfaden 10, der die Kettfäden 11 zu der anderen Seite hin abdeckt, bevor der Rhythmus wiederholt wird. Die Kettfäden 11 einer Gewebelage 6 und 7 werden in Bündeln (Multifilamente) oder einzeln als Monofilamente gewebt. Dabei wird ein erstes Bündel aus Kettfäden 11 in dem beschriebenen Rhythmus gewebt, während ein benachbartes zweites Bündel aus Kettfäden 11 in einem identischen aber versetzten Rhythmus gewebt wird. Ferner werden die Kettfäden 11 der beiden unterschiedlichen Gewebelagen 6 und 7 in demselben beschriebenen Webrhythmus allerdings versetzt zueinander gewebt, wie in der Figur 3 zu erkennen ist.

Statt der beschriebenen 7/1-Bindung wären auch eine 5/1/1-Bindung oder eine 3/1-Bindung oder eine 5/1/1/1-Bindung denkbar, wobei grundsätzlich Schussfäden 10 der Garnstärke 100 bis 1100 dtex als Monofilamente oder Multifilamente verwendet werden können.

Die beiden so voneinander getrennt gewebten Gewebelagen 6 und 7 werden in dem dargestellten Randabschnitt 3 durch wenigstens einen Randbindungsfaden 12 miteinander verbunden. Der Randbindungsfaden 12 wird in einer 4/4-Bindung mit den Schussfäden 10 der beiden Gewebelagen 6 und 7 verwebt, d.h. der Randbindungsfaden 12 wird für vier Schussfäden 10 der beiden Gewebelagen 6 und 7 auf einer Seite des Webfaches einer der Gewebelagen 6 oder 7 geführt und wechselt dann auf die gegenüberliegende Seite des Webfaches der anderen Gewebelage 6 oder 7.

Damit verläuft der Randbindungsfaden 12 in dem fertig gewebten Gurtband 1 periodisch für vier Schussfäden 10 an der Unterseite der in der Darstellung unteren Gewebelage 6 und für die nächsten vier Schussfäden 10 an der Oberseite der in der Darstellung oberen Gewebelage 7. Er verläuft damit periodisch wechselnd an den beiden freien Oberflächen der Gewebelagen 6 und 7 und wechselt dabei die Seite, indem er durch die Schussfäden 10 beider Gewebelagen 6 und 7 hindurch auf die andere freie Oberfläche tritt. Dabei verlaufen die Randbindungsfäden 12 kontinuierlich sowohl im Einzellagenabschnitt 15, in dem die beiden Gewebelagen 6 und 7 über die gesamte Fläche des Gurtbandes zu einer einzigen Gesamtgewebelage verbunden sind, als auch im Hohlabschnitt 14, in dem ein Hohlraum 5 vorgesehen ist. Der Randbindungsfaden 12 kann ebenfalls in Bündeln als Multifilamente verwebt werden, wobei außerdem auch mehrere Bündel oder einzelne Randbindungsfäden 12 vorgesehen sein können, die jeweils zueinander versetzt gewebt werden können. Dies ist insbesondere zur Verwirklichung der Breite B der Randabschnitte 3 und 4 sinnvoll, um bei der Breite B gleichzeitig eine entsprechend flächige Ausbildung der Randabschnitte 3 und 4 zu verwirklichen.

Ebenfalls sind in Figur 3 die zentralen Bindungsfäden 13 erkennbar, die in dem im linken Bereich dargestellten Einzellagenabschnitt 15 in einer 2/1/1/1/2-Bindung die beiden Gewebelagen 6 und 7 miteinander verbinden. Die zentralen Bindungsfäden 13 verlaufen daher periodisch zunächst jeweils wechselnd an beiden freien Oberflächen der Gewebelagen 6 und 7 und wechseln dabei die Seite, indem sie durch die Schussfäden 10 der beider Gewebelagen 6 und 7 hindurch auf die andere freie Oberfläche treten. Beim Übergang vom Einzellagenabschnitt 15 zum auf der rechten Seite dargestellten Hohlabschnitt 14, wird das periodische Webmuster der zentralen Bindungsfäden 13 unterbrochen und diskontinuierlich in ein neues periodisches Webmuster überführt, das nur noch in einer Gewebelage 6 oder 7 verwebt ist und vorzugsweise der periodischen Bindung der Kettfäden 11 entspricht, in der dargestellten Ausführungsform ist dies eine 7/1-Bindung.

Grundsätzlich können sich die Bindungsfäden 12, 13 in dem Material, der Garnstärke, der Farbe, der Dehnung und in verschiedenen anderen Eigenschaften von den Kettfäden 11 unterscheiden, da sie zur Verwirklichung der Verbindung grundsätzlich eine andere Aufgabe als die Kettfäden 11 haben. Die Bindungsfäden 12, 13 müssen z.B. keine Zugkräfte im Lastfall aufnehmen, so dass sie aus einem Garn mir einer geringeren Garnstärke als die Kettfäden 11 gebildet sein können.

In der Darstellung der Figur 3 wurden die Gewebelagen 6 und 7, in dem Verlauf der Kettfäden 11, der Schussfäden 10 und der Bindungsfäden 12, 13 auseinander gezogen, mit jeweils in einer Ebene angeordneten Schussfäden 10 der beiden Gewebelagen 6 und 7 dargestellt, damit das Webmuster besser zu erkennen ist. In dem fertigen Gurtband 1 liegen die Kettfäden 11, die Schussfäden 10 und die Bindungsfäden 12, 13 jedoch erheblich dichter zusammen in einem flächigen Gewebe vor, wobei in der Größenordnung von 10 bis 15 Schussfäden pro cm der Länge des Gurtbandes 1 vorgesehen sein können.

## Patentansprüche

1. Gurtband (1) für eine Sicherheitsgurteinrichtung eines Kraftfahrzeugs mit
- wenigstens einem Hohlabschnitt (14), aufweisend wenigstens einen Hohlraum (5) zur Aufnahme von elektronischen Bauteilen und/oder Leitungen, wobei
- der Hohlraum (5) durch zwei Gewebelagen (6,7) gebildet ist,
- die Gewebelagen (6,7) durch eine Vielzahl von Kettfäden (11) und Schussfäden (10) gebildet sind,
- die Gewebelagen (6,7) in den äußeren, Randabschnitten (3,4) durch einen oder mehrere parallel zu der Längsrichtung des Gurtbandes (1) verlaufenden Randbindungsfaden/verlaufende Randbindungsfäden (12) miteinander verbunden sind, wobei
- sich an den mindestens einen Hohlabschnitt (14) in Längsrichtung des Gurtbandes (1) mindestens ein Einzellagenabschnitt (15) anschließt, wobei der Einzellagenabschnitt (15) durch die zwei Gewebelagen (6,7) gebildet ist, wobei
- die Gewebelagen (6,7) in zwischen den Randabschnitten (3,4) liegenden Zentralabschnitten (2) durch mehrere parallel zu der Längsrichtung des Gurtbandes (1) verlaufenden zentralen Bindungsfäden (13) miteinander verbunden sind und wobei
- die zentralen Bindungsfäden (13) im Hohlabschnitt (14) nur in einer der Gewebelagen (6,7) verwebt sind.

2. Gurtband (1) nach Anspruch 1, **dadurch gekennzeichnet, dass**
- das Gurtband (1) eine Breite (A) von 40 bis 50 mm, bevorzugt von 46 bis 48 mm aufweist, und die Randabschnitte (3,4), in denen die Gewebelagen (6,7) durch die Randbindungsfäden (12) miteinander verbunden sind, eine Breite (B) von jeweils wenigstens 2 mm, bevorzugt von wenigstens 4 mm aufweisen.

3. Gurtband (1) nach Anspruch 2, **dadurch gekennzeichnet, dass**
- der Hohlabschnitt (14) eine Länge von 1300 mm bis 1700 mm aufweist und ein in dem Hohlabschnitt (14) angeordneter Hohlraum (5) eine Breite (C) von 10 bis 37 mm aufweist.

4. Gurtband (1) nach einem der vorangegangenen Ansprüche, **dadurch gekennzeichnet, dass**
- ein Abschnitt des Gurtbandes (1), der bei einer Sicherheitsgurteinrichtung eines Kraftfahrzeugs in dem angelegten Zustand im Bereich eines Umlenkers oder einer Gurtzunge angeordnet ist oder nach dem Abschnallen auf einem Gurtaufrollers aufzuwickeln ist, ein Einzellagenabschnitt (15) ist.

5. Gurtband (1) nach einem der vorangegangenen Ansprüche, **dadurch gekennzeichnet, dass**
- in einem Hohlbereich (14) die zentralen Bindungsfäden (13) innerhalb einer der Gewebelagen (6,7) mit der gleichen Bindung wie die zu der Gewebelage gehörigen Kettfäden (11) verwebt sind.

6. Gurtband (1) nach einem der vorangegangenen Ansprüche, **dadurch gekennzeichnet, dass**
- die Kettfäden (11) in einer 7/1-Bindung mit den Schussfäden (10) verbunden sind.

7. Gurtband (1) nach einem der vorangegangenen Ansprüche, **dadurch gekennzeichnet, dass**
- die beiden Gewebelagen (6,7) in einem oder mehreren Hohlabschnitten (14) unter Bildung von zwei oder mehr voneinander getrennten Hohlräumen (5) miteinander verbunden sind.

8. Gurtband (1) nach einem der vorangegangenen Ansprüche, **dadurch gekennzeichnet, dass**
- in dem Hohlraum (5) wenigstens ein elektrischer Leiter und/oder ein elektronisches Bauteil angeordnet ist.

## Claims

1. Belt strap (1) for a safety belt device of a motor vehicle, comprising
- at least one hollow portion (14) which has at least one cavity (5) for receiving electronic components and/or lines, wherein
- the cavity (5) is formed by two fabric layers (6, 7),
- the fabric layers (6, 7) are formed by a plurality of warp threads (11) and weft threads (10),
- the fabric layers (6, 7) are connected to each other in the outer edge portions (3, 4) by one or more edge binding threads (12) which extend in parallel with the longitudinal direction of the belt strap (1), wherein
- at least one single-layer portion (15) adjoins the at least one hollow portion (14) in the longitudinal direction of the belt strap (1), wherein the single-layer portion (15) is formed by the two fabric layers (6, 7), wherein
- the fabric layers (6, 7), in central portions (2) situated between the edge portions (3, 4), are interconnected by a plurality of central binding threads (13) which extend in parallel with the longitudinal direction of the belt strap (1), and wherein
- the central binding threads (13) are woven in only one of the fabric layers (6, 7) in the hollow portion (14).

2. Belt strap (1) according to claim 1, **characterized in that**
- the belt strap (1) has a width (A) of from 40 to 50 mm, preferably of from 46 to 48 mm, and the edge portions (3, 4), in which the fabric layers (6, 7) are interconnected by the edge binding threads (12), each have a width (B) of at least 2 mm, preferably of at least 4 mm.

3. Belt strap (1) according to claim 2, **characterized in that**
- the hollow portion (14) has a length of from 1300 mm to 1700 mm, and a cavity (5) arranged in the hollow portion (14) has a width (C) of from 10 to 37 mm.

4. Belt strap (1) according to any of the preceding claims, **characterized in that**
- a portion of the belt strap (1), which in a safety belt device of a motor vehicle is arranged in the region of a deflector or a belt tongue when being worn, or is to be wound on a belt retractor after unbuckling, is a single-layer portion (15).

5. Belt strap (1) according to any of the preceding claims, **characterized in that**
- in a hollow region (14), the central binding threads (13) within one of the fabric layers (6, 7) are woven with the same weave as the warp threads (11) belonging to the fabric layer.

6. Belt strap (1) according to any of the preceding claims, **characterized in that**
- the warp threads (11) are connected to the weft threads (10) in a 7/1 weave.

7. Belt strap (1) according to any of the preceding claims, **characterized in that**
- the two fabric layers (6, 7) are interconnected in one or more hollow portions (14) to form two or more mutually disconnected cavities (5).

8. Belt strap (1) according to any of the preceding claims, **characterized in that**
- at least one electrical conductor and/or one electronic component is arranged in the cavity (5).

## Revendications

1. Sangle de ceinture (1) pour un dispositif de ceinture de sécurité d'un véhicule automobile, comportant
- au moins une section creuse (14), présentant au moins une cavité (5) pour la réception de câbles et/ou composants électroniques,
- la cavité (5) étant formée par deux couches de tissu (6, 7),
- les couches de tissu (6, 7) étant formées par une pluralité de fils de chaîne (11) et de fils de trame (10),
- les couches de tissu (6, 7) étant liées l'une à l'autre dans les sections de bord (3, 4) extérieures par un fil de liaison de bord ou plusieurs fils de liaison de bord (12) s'étendant parallèlement à la direction longitudinale de la sangle de ceinture (1),
- au moins une section de couche unique (15) se raccordant à l'au moins une section creuse (14) dans la direction longitudinale de la sangle de ceinture (1), la section de couche unique (15) étant formée par les deux couches de tissu (6, 7),
- les couches de tissu (6, 7) étant liées l'une à l'autre dans des sections centrales (2) situées entre les sections de bord (3, 4) par plusieurs fils de liaison centraux (13) s'étendant parallèlement à la direction longitudinale de la sangle de ceinture (1) et
- les fils de liaison centraux (13) étant tissés uniquement dans une des couches de tissu (6, 7) dans la section creuse (14).

2. Sangle de ceinture (1) selon la revendication 1, **caractérisée en ce que**
- la sangle de ceinture (1) présente une largeur (A) de 40 à 50 mm, de préférence de 46 à 48 mm, et les sections de bord (3, 4), dans lesquelles les couches de tissu (6, 7) sont liées l'une à l'autre par des fils de liaison de bord (12), présentent une largeur (B) de respectivement au moins 2 mm, de préférence d'au moins 4 mm.

3. Sangle de ceinture (1) selon la revendication 2, **caractérisée en ce que**
- la section creuse (14) présente une longueur de 1300 mm à 1700 mm et une cavité (5) agencée dans la section creuse (14) présente une largeur (C) de 10 à 37 mm.

4. Sangle de ceinture (1) selon l'une des revendications précédentes, **caractérisée en ce que**
- une section de la sangle de ceinture (1), qui, pour un dispositif de ceinture de sécurité d'un véhicule automobile, est agencée à l'état bouclé dans la zone d'un dispositif de renvoi ou d'une languette de ceinture ou doit être enroulée sur un enrouleur de ceinture après le débouclage, est une section de couche unique (15).

5. Sangle de ceinture (1) selon l'une des revendications précédentes, **caractérisée en ce que**
- dans une zone creuse (14) les fils de liaison centraux (13) sont tissés dans une des couches de tissu (6, 7) avec la même liaison que celle des fils de chaîne (11) appartenant à la couche de tissu.

6. Sangle de ceinture (1) selon l'une des revendications précédentes, **caractérisée en ce que**
- les fils de chaîne (11) sont liés dans une liaison 7/1 avec les fils de trame (10).

7. Sangle de ceinture (1) selon l'une des revendications précédentes, **caractérisée en ce que**
- les deux couches de tissu (6, 7) sont liées l'une à l'autre dans une ou plusieurs sections creuses (14) en formant deux ou plusieurs cavités (5) séparées les unes des autres.

8. Sangle de ceinture (1) selon l'une des revendications précédentes, **caractérisée en ce que**
- au moins un câble électrique et/ou un composant électronique sont agencés dans la cavité (5).
